# EUROPÄISCHE PATENTSCHRIFT

(11) **EP 1 844 839 B1**
(45) Veröffentlichungstag und Bekanntmachung des Hinweises auf die Patenterteilung: **27.07.2016**
(21) Anmeldenummer: 07101610.9
(22) Anmeldetag: 02.02.2007
(51) Int. Cl.: B01D 45/08, B01D 45/16, B01D 46/24, B01D 46/00

(54) **LUFTENTÖLELEMENT**
AIR-OIL SEPARATOR
SÉPARATEUR AIR-HUILE

(30) Priorität: 12.04.2006 DE 202006006084 U
(43) Veröffentlichungstag der Anmeldung: 17.10.2007
(73) Patentinhaber: MANN+HUMMEL GmbH, 71638 Ludwigsburg (DE)
(72) Erfinder: Becker, Stefan, 68305 Mannheim (DE); Schippers, Carsten, 33739 Bielefeld (DE); Heikamp, Wolfgang, 67165 Waldsee (DE); Neumann, Tobias, 76773 Kuhardt (DE); Stephan, Andreas, 44579 Castrop-Rauxel (DE)

(56) Entgegenhaltungen:
- EP-A1- 0 278 772
- WO-A2-03/002233
- DE-A1- 19 621 935
- GB-A- 1 255 642
- JP-A- 2001 263 872
- US-A- 5 205 848
- US-A1- 2004 000 236

## Beschreibung

### Technisches Gebiet

Die Erfindung betrifft ein Luftentölelement zum Abscheiden von Flüssigkeitstropfen aus Gasen, insbesondere zur Entölung der Luft bei Kompressoren.

### Stand der Technik

Ein Gasstrom, der mit Flüssigkeiten in Kontakt kommt, kann mit Flüssigkeitstropfen angereichert werden. Flüssigkeitstropfen können mechanisch, z.B. beim Durchströmen des Gases durch die Flüssigkeit oder bei einer Führung des Gasstroms über einer Flüssigkeit mitgerissen werden. Bei Schraubenkompressoren, z.B., kommt Luft mit Öl in Kontakt. Das Öl wird dabei zur Abdichtung, Kühlung und zur Schmierung des Kompressors verwendet. Flüssigkeitstropfen können in einem Gasstrom auch durch Kondensation entstehen, z.B. entstehen durch Kondensation Flüssigkeitstropfen in einem Dampfstrom. Bei der Herstellung von Druckluft können Temperaturen von etwa 200 °C entstehen. Durch die Temperaturen kann ein Teil des Öls, das z.B. bei einem Schraubenkompressor zugeführt wird, verdampfen. Bei einer anschließenden Abkühlung kondensiert der Öldampf zu Tröpfchen und Nebel. Die Öltröpfchen eines Schraubenkompressors haben dabei einen Durchmesser in der Größenordnung von etwa 0,01 µm bis 100 µm.

Tropfenabscheider dienen zur Abscheidung von Flüssigkeitstropfen aus Gasen. Tropfenabscheider können eine flüssige von einer gasförmigen Phase trennen. Tropfenabscheider können zur Reinigung von Abluftströmen eingesetzt werden. Mit Tropfenabscheider können mitgeführte Flüssigkeitstropfen aus Prozessgasströmen abgeschieden werden. Durch die Abscheidung kann die Korrosion oder Erosion von Anlagenteilen oder auch das Anbacken oder Ablagerungen an Anlagenteilen reduziert werden. Tropfenabscheider werden z.B. zum Entölen von Druckluft eingesetzt.

Tropfenabscheider können als Trägheitsabscheider ausgebildet sein. Bei Trägheitsabscheidern wird die Massenträgheit der Tropfen ausgenutzt, um die Tropfen an Wandungen abzuscheiden. Trägheitsabscheider sind besonders für größere Tropfen geeignet, meist oberhalb von etwa 20 µm Tropfendurchmesser. Eine einfache Form eines Tropfenabscheiders ist eine Prallplatte. Bei einer Prallplatte wird ein mit Flüssigkeitstropfen beladener Gasstrom so gegen eine Platte geführt, dass der Gasstrom die Richtung ändert. Durch die Massenträgheit behalten in dem Gasstrom enthaltene Tropfen ihre Richtung bei, treffen auf die Platte auf und werden von dort abgeleitet. Eine andere Art der Trägheitsabscheidung macht sich Zentrifugalkräfte zu Nutze. Bei Zentrifugalabscheidern wird der Gasstrom auf einer gekrümmten Bahn geführt. Durch die Zentrifugalkräfte werden die Tropfen auf einer äußeren Bahn, mit möglichst großem Krümmungsradius, geführt. Dadurch werden die Tropfen in diesem äußeren Bereich konzentriert. Die Tropfen können dann z.B. an einer Wandung entlang des äußeren Bereichs des Gasstroms abgeschieden werden. Von der Wandung können die Tropfen abgeleitet werden. Alternativ kann auch nur Gas aus dem inneren Bereich des Gasstroms mit niedriger Tropfenkonzentration entnommen werden. Als Zentrifugalabscheider können z.B. verschiedene Arten von Zyklonen eingesetzt werden.

Tropfenabscheider können als Drainageelement ausgebildet sein. Bei einem Drainageelement wird ein mit Flüssigkeitstropfen beladener Gasstrom durch eine netzartige und/oder poröse Drainagestruktur geleitet. Als Drainagestruktur kann z.B. ein Drahtgestrick oder ein Vlies, z.B. aus Kunststoff oder Glasfaser, dienen. Tropfen durchlaufen die Drainagestruktur langsamer als der Gasstrom. Durch die Schwerkraft bewegen sich die Tropfen zum geodätisch unteren Bereich der Drainagestruktur, sammeln sich und können abgeleitet werden.

Die Trägheitsabscheidung ist umso effizienter, je größer die vom Gasstrom mitgeführten Tropfen sind. Zur Tropfenvergrößerung dienen Koaleszierelemente. In Koaleszierelementen wird der Gasstrom durch eine netzartige und/oder poröse Koaleszierstruktur geleitet. Als Koaleszierstruktur kann z.B. ein Drahtgestrick oder ein Vlies, z.B. aus Kunststoff oder Glasfaser, dienen. Der Gasstrom folgt den Stromlinien. Die Tropfen können den Stromlinien nicht folgen und bleiben an Begrenzungsflächen der Koaleszierstruktur haften. Auf der Koaleszierstruktur bildet sich ein Flüssigkeitsfilm aus. Kleine Tropfen vereinigen sich zu größeren Tropfen, d.h. sie koaleszieren. Die vergrößerten Tropfen verlassen die Koaleszierstruktur. Koaleszierelemente können auch einen Drainageeffekt zeigen. Dabei bilden die Tropfen den Flüssigkeitsfilm auf der Koaleszierstruktur, bewegen sich zum geodätisch unteren Bereich und können von dort abgeleitet werden. Daher kann ein kombiniertes Koaleszier- und Drainageelement ausgebildet sein. Die größeren und damit schwereren Tropfen, die die Koaleszierstruktur verlassen, fallen im Gasstrom und können auch dadurch aus dem Gasstrom entfernt werden.

Je nach Einsatzgebiet sind dem Fachmann unterschiedliche Kombinationen von Drainage- und Koaleszierelementen sowie von Trägheitsabscheidern zur Abscheidung von Flüssigkeiten aus Gasen bekannt. Bei der Entölung von Druckluft aus Kompressoren ist das nachfolgend beschriebene System bekannt. In einem Druckbehälter ist am oberen Ende ein zylinderförmiges Strömungsleitblech eingebracht. Der vom Strömungsleitblech gebildete Zylinder ist nach unten zum Druckbehälterinneren hin offen. Zwischen das Strömungsleitblech und die Druckbehälterwand strömt die Druckluft tangential ein, wodurch eine Vorabscheidung von Öl an der Wandung des Druckbehälters erreicht wird, das abgeschiedene Öl wird in den Kompressor zurückgefördert. Die Druckluft strömt von unten in das Luftentölelement, welches sich innerhalb des vom Strömungsleitblech gebildeten Zylinders befindet. Das Luftentölelement umfasst eine oder mehrere Koaleszier- und/oder Drainagestufen, z.B. eine Koaleszierstruktur aus Borsilikat-Glasfasern und eine Drainagestruktur aus Polyestervlies. Das Vlies aus Borsilikat-Glasfasern und das Polyestervlies sind jeweils auf Stützkörper aus Metall aufgezogen. Das Luftentölelement wird von außen nach innen durchströmt. Kleine Flüssigkeitstropfen werden in der Koaleszierstruktur zu größeren Tropfen vereinigt und sinken teilweise bereits in der Koaleszierstruktur ab. Größere Tropfen, die die Koaleszierstruktur verlassen, sinken weiter in der Drainagestruktur ab und sammeln sich am Boden des Luftentölelements. Das Öl am Boden des Luftentölelements wird über eine Drainageleitung zurück zum Kompressor gefördert. Die entölte Druckluft wird vom Druckbehälter in einen Druckspeicherbehälter befördert. Weitere, ähnliche Luftentölelemente sind beispielsweise aus der US 2004/000236 A1, der EP 0 278 772 A1 oder der JP 2001-263872 A bekannt.

Nachteilig an den beschriebenen Systemen zur Luftentölung, wie sie z.B. bei Schraubenkompressoren eingesetzt wird, ist, dass die Drainageleitung separat ausgebildet ist. Die Drainageleitung ist ein Rohr, das frei, meist in der Mitte des Luftentölelements, steht und das mit dem Luftentölelement befestigt ist. Die Drainageleitung wird meist nach oben aus dem Luftentölelement herausgeführt und muss dann mit einer Leitung, z.B. mit einer Schlauchleitung, die zum Kompressor führt, verbunden werden, um das Öl zurückführen zu können. Die Drainageleitung ist daher empfindlich gegen Krafteinwirkungen, die auf die Leitung ausgeübt werden können im Bereich, in dem die Drainageleitung aus dem Luftentölelement herausgeführt ist. Fehlpositionierungen können während der Fertigung des Luftentölelements geschehen.

### Offenbarung der Erfindung

Aufgabe der Erfindung ist es daher, eine Vorrichtung zum Abscheiden von Flüssigkeiten aus Gasen bereitzustellen, die eine fertigungstechnisch leichtere Positionierung der Drainageleitung ermöglicht.

Eine weitere Aufgabe ist es, eine Vorrichtung zum Abscheiden von Flüssigkeiten aus Gasen bereitzustellen, bei der die Drainageleitung weniger empfindlich auf Krafteinwirkungen ist.

Diese Aufgaben werden gelöst durch ein Luftentölelement, welches in einen Druckbehälter einer Luftverdichtungsanlage, beispielsweise eines Schraubenkompressors, einbringbar ist und ein um ein Stützrohr gewickeltes Vlies, eine Ölauffangmulde, die geeignet ist, die in dem Vlies absinkenden Tropfen zusammen mit aus dem Vlies herausdringenden und im Inneren des Stützrohrs nach unten fallenden großen Tropfen zu sammeln und eine als Rohr ausgebildetete, aus dem Luftentölelement nach oben herausführende Drainageleitung zur Abführung der abgeschiedenen Flüssigkeiten aus der Ölauffangmulde und aus Z dem Luftentölelement umfasst wobei die Drainageleitung an dem Stützrohr integriert angebracht ist.

Durch die Anbringung der Drainageleitung am Stützrohr kann eine eigene Positionierung der Drainageleitung bei der Fertigung entfallen. Durch die Anbringung der Drainageleitung am Stützrohr kann die Drainageleitung mechanischen Belastungen besser Stand halten.

Die Drainageleitung kann am Stützrohr angeschweißt, angespritzt oder mit dem Stützrohr einstückig gefertigt sein. Die Drainageleitung kann auch in eine röhrenförmige Aufnahme des Stützrohrs eingeschoben sein oder am Stützrohr angeklipst sein. Durch die unterschiedlichen Befestigungsmöglichkeiten kann eine optimierte Fertigung der Vorrichtung zur Abscheidung von Flüssigkeiten aus Gasen erreicht werden.

Bevorzugt ist am Stützkörper eine Aussparung vorhanden, in die die Drainageleitung eingebracht werden kann. Dies kann z.B. eine am Stützkörper angebrachte Röhre sein, in die die Drainageleitung eingeschoben werden kann. Wird der Stützkörper aus mehreren Modulen zusammengesetzt, so kann die Drainageleitung einstückig durch die röhrenförmigen Aussparungen mehrerer Module hindurch gesteckt werden, wodurch Abdichtungen der Drainageleitung zwischen den Stützkörpermodulen entfallen.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein können.

### Kurze Beschreibung der Zeichnungen

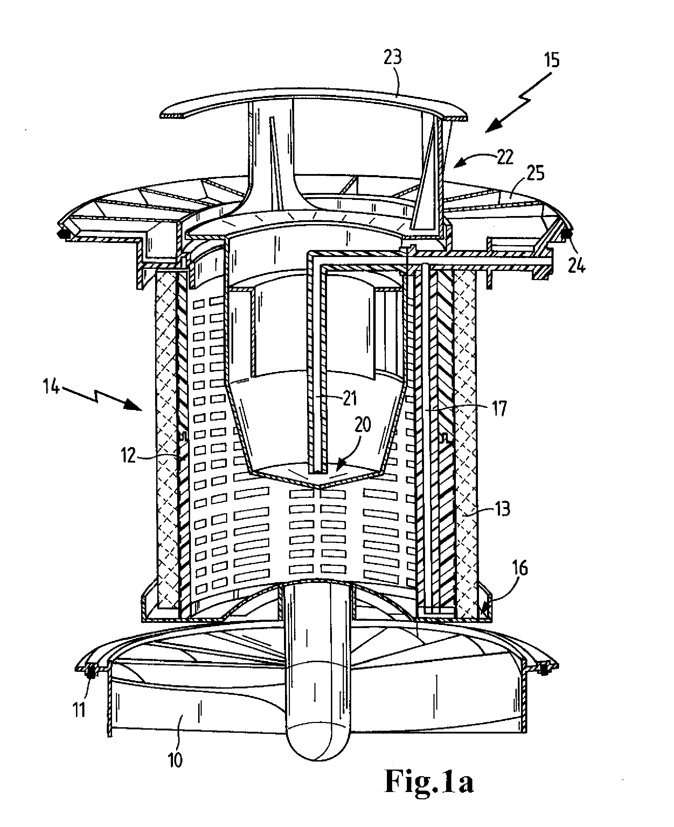

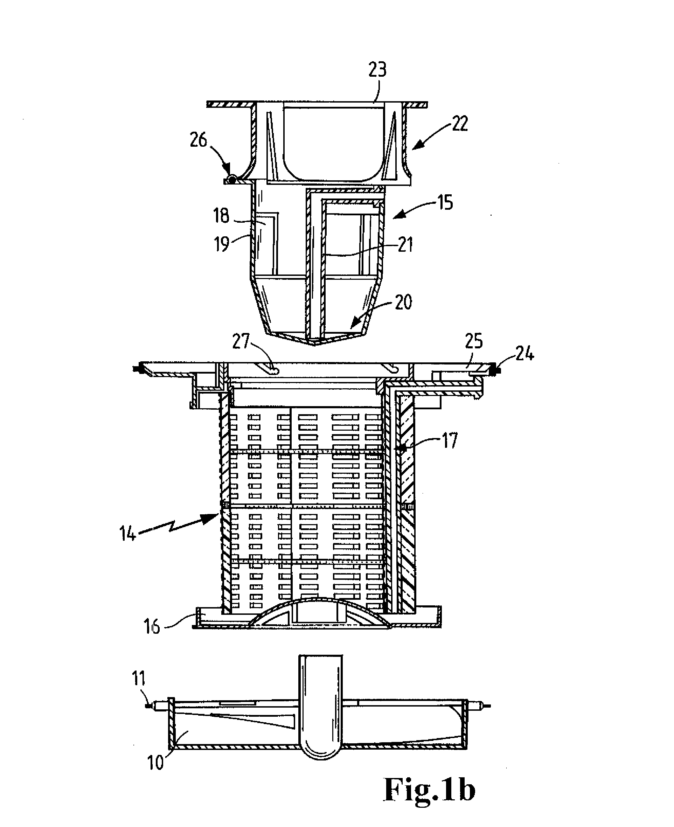

- Fig. 1 a: zeigt eine Vorrichtung zur Abscheidung von Flüssigkeiten aus Gasen, wie sie zur Luftentölung bei einem Luftverdichtungssystem mit Schraubenkompressor eingesetzt werden kann,
- Fig. 1 b: zeigt die Vorrichtung aus Fig. 1a, wobei die Vorrichtung in mehrere Bestandteile zerlegt ist und
- Fig. 2: zeigt eine alternative Vorrichtung zur Abscheidung von Flüssigkeiten aus Gasen, wie sie zur Luftentölung bei einem Luftverdichtungssystem mit Schraubenkompressor eingesetzt werden kann, mit aus mehreren Stützrohren zusammensetzbarem Hauptabscheider.

### Ausführungsform(en) der Erfindung

Bei einem Luftverdichtungssystem mit Schraubenkompressor werden bei der Drucklufterzeugung im Schraubenkompressor etwa 5 kg Öl / m³ Luft zugeführt. Das Öl dient sowohl zur Schmierung des Kompressors als auch zur Abdichtung. Bei einem herkömmlichen Luftverdichtungssystem, das zur Bereitstellung so genannter Ölfreier Druckluft dient, d.h. das Druckluft mit Ölgehalten von etwa 1 bis 3 mg/m³ Luft bereitstellen soll, muss die ölhaltige Druckluft entölt werden. In einem herkömmlichen Luftverdichtungssystem findet eine Vorabscheidung in einem Druckbehälter statt. Die Vorabscheidung wird durch tangentiales Einströmen der ölhaltigen Luft in den Druckbehälter erreicht. Die Luft strömt dabei um einen zylinderförmigen Einsatz im Druckbehälter herum in dem ein Luftentölelement zur weiteren Abscheidung des Öls eingebracht ist. Durch den tangentialen Eintritt und das Abscheiden von Öl an der Druckbehälterwand als Prallplatte, kann im Druckbehälter eine Reduktion der Ölkonzentration in der Druckluft, die am Luftentölelement ankommt, auf etwa 2 bis 5 g/m³ Luft erreicht werden. Das abgeschiedene Öl wird dem Kompressor wieder zugeführt. In der in Fig. 1 a und b dargestellten Ausführungsform der Erfindung kann die ölhaltige Luft nun beliebig in den Druckbehälter einströmen. Die ölhaltige Luft durchströmt im Druckbehälter von unten den Leitapparat 10 eines Inlinezyklons, der als Vorabscheider dient. Der Leitapparat 10 dichtet nur unvollständig mit einer Lippe 11 gegen die Druckbehälterwand ab, so dass Öl an der Wand des Druckbehälters entlang nach unten laufen kann. Der Druckbehälter wird so in einen Rohluftbereich und einen Vorabscheiderbereich getrennt. Durch einen derart ausgeführten Vorabscheider kann die Ölkonzentration auf unter 0,5 g/m³ Luft reduziert werden. Öl, das an der Wand oder am Vorabscheider abgeschieden wird, sammelt sich im unteren Bereich des Druckbehälters und kann von dort mit einer Ölrückführleitung zum Kompressor zurückbefördert werden. Durch die im Vergleich mit herkömmlichen Systemen zur Luftentölung niedrigere Ölkonzentration ergeben sich Freiheiten für die Konstruktion des Hauptabscheiders 14 und/ oder des Nachabscheiders 15, da diese geringere Abscheideraten erreichen müssen. Die Luft durchströmt vom Vorabscheidebereich einen Hauptabscheider, der in der Ausführungsform von Fig. 1 a als ein auf ein Stützrohr 12 aufgebrachtes Vlies 13 aus Borsilikat-Glasfaser als Koaleszierstruktur ausgeführt ist. Beim Durchströmen des Vlieses 13 verbinden sich kleinere Tropfen zu größeren Tropfen, gleichzeitig sinken die Tropfen in der Koaleszierstruktur ab. Die absinkenden Tropfen sammeln sich in einer ersten Mulde 16 zusammen mit großen Tropfen, die aus der Koaleszierstruktur herausdringen und im Inneren des Stützrohrs 12 im Gasstrom geodätisch nach unten fallen. Durch eine erste Drainageleitung 17 wird das abgeschiedene Öl aus der Mulde 16 zurückgeführt. Die erste Drainageleitung 17 ist in Fig. 1 a und b am Stützrohr 12 angeschweißt. Der Luftstrom, der aus dem Hauptabscheider 14 zum Nachabscheider 15 strömt, enthält nun im Wesentlichen größere Öltropfen, die im Nachabscheider 15 abgeschieden werden können. In der Ausführungsform in Fig. 1 a und b dient ein Umkehrzyklon 18 zur Nachabscheidung. Im Umkehrzyklon wird die Luft in Rotation versetzt, so dass die Öltropfen an der Wandung 19 des Umkehrzyklons 18 abgeschieden werden. Die Öltropfen gleiten an der Wandung 19 des Umkehrzyklons 18 in die zweite Mulde 20 und werden von der zweiten Mulde 20 über eine zweite Drainageleitung 21 wieder zum Kompressor zurückgeführt. Die zweite Drainageleitung 21 ist in der in Fig. 1 a und b dargestellten Ausführungsform mit der ersten Drainageleitung 17 gekoppelt, sie könnte jedoch auch separat verlaufen. Der Nachabscheider 15 umfasst einen Abstandshalter 22, an dessen oberen Ende ein Befestigungsring angebracht ist. Die Vorrichtung zur Abscheidung von Flüssigkeiten aus Gasen kann mit diesem Befestigungsring 23 im Druckbehälter befestigt werden. Eine am oberen Ende des Hauptabscheiders 14 angebrachte Trennplatte 25 dichtet mit der Dichtung 24 gegen den Druckbehälter ab. Die Trennplatte 25 trennt den Vorabscheidergasbereich von der entölten Luft, die den Nachabscheider 15 verlässt.

In Fig. 1b ist der modulartige Aufbau der Vorrichtung zur Abscheidung von Flüssigkeiten aus Gasen dargestellt. Der als Inlinezyklon 10 ausgeführte Vorabscheider 10, der Hauptabscheider 14 und der Nachabscheider 15 sind als Baugruppen ausgeführt. Die Baugruppen können z.B. mit einer Bajonettverbindung zusammengefügt werden. Zapfen 26 und Aufnahmen 27 für die Zapfen 26 sind für die Koppelung des Nachabscheiders 15 an den Hauptabscheider 14 dargestellt. Andere Steck-, Rast- oder Schraubverbindungen sind natürlich auch denkbar. Ebenso könnten die Baugruppen miteinander verschweißt werden. Die einzelnen Baugruppen der Fig. 1b können alle aus Kunststoff, insbesondere aus glasfaserverstärktem Polyamid, gefertigt sein. Die erste Drainageleitung 17 kann mittels Vibrations-, Ultraschall- oder Spiegelschweißen am Stützrohr angebracht sein. Benötigte Dichtungen 11, 26 oder weitere Dichtungen können angespritzt werden oder als O-Ring-Dichtung in Nuten eingebracht werden. Durch den modulartigen Aufbau können verschiedene Elemente für eine Baugruppe miteinander ausgetauscht werden. So kann z.B. statt des Umkehrzyklons 18 ein Spiralzyklon oder ein zweiter Inlinezyklon verwendet werden. Unterschiedlich hohe Hauptabscheider mit unterschiedlich großen Flächen der Koaleszierstruktur können eingesetzt werden. Sind die Baugruppen Vorabscheider, Hauptabscheider und Nachabscheider trennbar miteinander verbunden, so kann bei einer Wartung auch nur eine einzelne Baugruppe ausgetauscht werden. Z.B. könnten der Inlinezyklon 10 und der Nachabscheider 15 als Lebensdauerbauelement ausgeführt sein und nur der Hauptabscheider 14 mit dem Vlies 13 wird ausgewechselt.

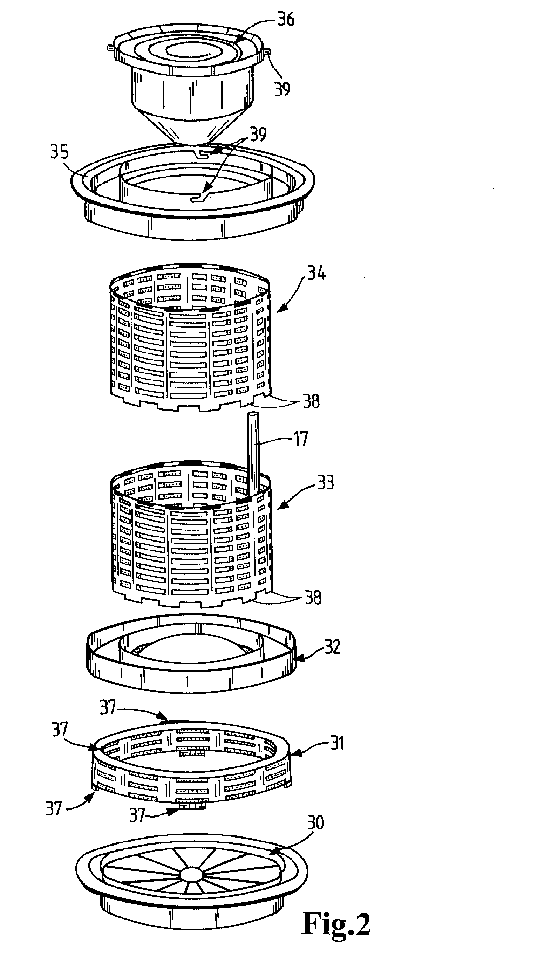

In Fig. 2 ist eine Ausführungsform der Vorrichtung zur Abscheidung von Flüssigkeiten aus Gasen dargestellt, mit aus mehreren Stützrohren zusammensetzbarem Hauptabscheider zerlegt in ihre Einzelteile. In der Ausführungsform der Fig. 2 dient ein Inlinezyklon 30 als Vorabscheider. Der Inlinezyklon 30 kann über ein Distanzstück 31 mit Rastverbindungen 37 mit einer Ölauffangmulde 32 trennbar verbunden werden. Die Ölauffangmulde 32 kann mit einem ersten Stützrohr 33 durch Steckverbindungen 38 verbunden werden. Ein zweites Stützrohr 34, das gleich aufgebaut ist wie das erste Stützrohr 33, kann auf das erste Stützrohr 33 mit Steckverbindungen 38 gesteckt werden. Weitere zusätzliche nicht dargestellte Stützrohre könnten hinzugefügt werden. In der schematischen Darstellung der Fig. 2 ist Vlies, welches das Stützrohr umgibt, nicht dargestellt. Das Vlies ist um den Stützkörper gewickelt und kann dem Abschlussstück 35 verklebt werden. Beim Verkleben des Vlieswickels mit dem Abschlussstück kann ein Teil der Drainageleitung 17 mit einem weiteren Teil der Drainageleitung und/oder mit dem Anschlussstück der Drainageleitung für den Anschluss am Druckbehälter am Abschlussstück 35 verklebt werden. Wiederum durch eine Steckverbindung kann das Abschlussstück 35 auf das zweite Stützrohr 34 gesteckt werden. In das Abschlussstück 35 kann als Nachabscheider ein Spiralzyklon 36 eingesetzt werden. In der Ausführungsform der Fig. 2 wird der Spiralzyklon 36 mit einer Bajonettverbindung 39 am Abschlussstück 35 trennbar montiert. An die zusammengesteckten Stützrohre 33, 34 kann die erste Drainageleitung 17 angeklipst werden. Alternativ kann die Drainageleitung 17 in eine Aussparung an den Stützkörpermodulen 33 und 34 eingeschoben werden. Bevorzugt wird eine einstückige Drainageleitung 17 in eine röhrenförmige Aussparung der Stützkörpermodule 33, 34 eingeschoben. Es können jedoch auch Drainageleitungen 17 an den einzelnen Stützkörpermodulen 33, 34 angebracht werden, die dann beim Zusammenbau der Stützkörpermodule 33, 34 gegeneinander abgedichtet werden.

## Patentansprüche

1. Luftentölelement (14), einbringbar in einen Druckbehälter einer Luftverdichtungsanlage, beispielsweise eines Schraubenkompressors, umfassend ein um ein Stützrohr (12) gewickeltes Vlies (13), eine Ölauffangmulde (16, 32), die geeignet ist, die in dem Vlies absinkenden Tropfen zusammen mit aus dem Vlies (13) herausdringenden und im Inneren des Stützrohrs (12) nach unten fallenden großen Tropfen zu sammeln und eine als Rohr ausgebildete aus dem Luftentölelement (14) nach oben herausführende Drainageleitung (17) zur Abführung der abgeschiedenen Flüssigkeiten aus der Ölauffangmulde (16, 32) und aus dem Luftentölelement (14), **dadurch gekennzeichnet, dass** die Drainageleitung (17) an dem Stützrohr (12) integriert angebracht ist.

2. Luftentölelement (14) nach Anspruch 1, wobei die Drainageleitung (17) am Stützrohr (12) angeschweißt, angeklipst, angeklebt, angespritzt, einstückig mit dem Stützrohr (12) gefertigt oder in eine Aufnahme des Stützrohrs eingebracht ist.

3. Luftentölelement (14) nach einem der vorhergehenden Ansprüche, wobei die Drainageleitung (17) in eine Aussparung des Stützrohrs (12) eingebracht ist.

4. Luftentölelement (14) nach einem der vorhergehenden Ansprüche, wobei die Drainageleitung (17) in eine röhrenförmige Aussparung des Stützrohrs (12) eingeschoben ist.

5. Luftentölelement (14) nach einem der vorhergehenden Ansprüche, wobei die integriert angebrachte Drainageleitung (17) beim Verkleben eines Wickels auf dem Stützrohr (12) mit der Endscheibe verbunden wird.

6. Luftentölelement (14) nach einem der vorhergehenden Ansprüche, wobei eine einstückige Drainageleitung (17) an einem aus mehreren Stücken zusammengesetzten Stützrohr (12) angebracht ist.

## Claims

1. Air-oil separating element (14), insertable into a pressure reservoir of an air compressor device, for example of a screw-type compressor, comprising a fleece (13) wound around a support tube (12), an oil catch pan (16, 32) capable of collecting the droplets sinking in the fleece together with large droplets leaking out from the fleece (13) and dropping down in the interior of the support tube (12) and a drainage line (17) designed as pipe, leading out from the air-oil separating element (14) to the top for discharging the separated liquids from the oil catch pan (16, 32) and from the air-oil separating element (14), **characterized in that** the drainage line (17) is integrally attached to the support pipe (12).

2. Air-oil separating element (14) according to claim 1, wherein the drainage line (17) is welded to, clipped to, glued to, injection molded to the support tube (12), made in one piece with the support tube (12) or introduced into a receptacle of the support tube.

3. Air-oil separating element (14) according to one of the above claims, wherein the drainage line (17) is introduced into a recess of the support tube (12).

4. Air-oil separating element (14) according to one of the above claims, wherein the drainage line (17) is pushed into a tube-shaped recess of the support tube (12).

5. Air-oil separating element (14) according to one of the above claims, wherein the integrally attached drainage line (17) is connected to the end disk when gluing a winding on the support tube (12).

6. Air-oil separating element (14) according to one of the above claims, wherein a one-piece drainage line (17) is attached to a support tube (12) combined of multiple pieces.

## Revendications

1. Élément de déshuilage de l'air (14) pouvant être introduit dans un réservoir sous pression d'une installation de compression d'air, par exemple d'un compresseur à vis, comprenant un non-tissé (13) enroulé autour d'un tube de support (12), une cuvette collectrice d'huile (16, 32) apte à collecter les gouttes contenues dans le non-tissé et tombant de ce dernier, en même temps que les grosses gouttes sortant du non-tissé (13) et tombant à l'intérieur du tube de support (12), et un tuyau de drainage (17) exécuté sous forme de tube, sortant de l'élément de déshuilage de l'air (14), remontant vers l'extérieur et destiné à évacuer les liquides séparés de la cuvette collectrice d'huile (16, 32) et de l'élément de déshuilage de l'air (14), **caractérisé en ce que** le tuyau de drainage (17) est monté de façon intégrée au tube de support (12).

2. Élément de déshuilage de l'air (14) selon la revendication 1, le tuyau de drainage (17) étant soudé, clipsé, collé, injecté au tube de support (12) et fabriqué en un bloc avec le tube de support (12) ou inséré dans un logement du tube de support.

3. Élément de déshuilage de l'air (14) selon l'une des revendications précédentes, le tuyau de drainage (17) étant introduit dans un évidement du tube de support (12).

4. Élément de déshuilage de l'air (14) selon l'une des revendications précédentes, le tuyau de drainage (17) étant poussé dans un évidement tubulaire du tube de support (12).

5. Élément de déshuilage de l'air (14) selon l'une des revendications précédentes, le tuyau de drainage (17) intégré étant relié au disque d'extrémité lors du collage d'une bobine sur le tube de support (12).

6. Élément de déshuilage de l'air (14) selon l'une des revendications précédentes, un tuyau de drainage (17) monobloc étant assemblé à un tube de support (12) constitué de plusieurs morceaux.
